# EUROPÄISCHE PATENTSCHRIFT

(11) **EP 0 827 859 B1**
(45) Veröffentlichungstag und Bekanntmachung des Hinweises auf die Patenterteilung: **05.03.2003**
(21) Anmeldenummer: 97112416.9
(22) Anmeldetag: 19.07.1997
(51) Int. Cl.: B60K 28/16, B60K 41/02

(54) **Verfahren und Vorrichtung zur Verbesserung der Fahrstabilität im Schubbetrieb**
Method and system for improving the driving stability during deceleration
Méthode et dispositif pour l'amélioration de la stabilité de conduite en décéleration

(30) Priorität: 04.09.1996 DE 19635809
(43) Veröffentlichungstag der Anmeldung: 11.03.1998
(73) Patentinhaber: Bayerische Motoren Werke Aktiengesellschaft, 80788 München (DE)
(72) Erfinder: Welsch, Klaus, 85386 Eching-Günzenhausen (DE); Schmidt, Klaus, 85307 Paunzhausen (DE)

(56) Entgegenhaltungen:
- DE-A- 3 146 738
- DE-A- 3 528 389
- DE-A- 19 507 622
- FR-A- 2 645 805

## Beschreibung

Die Erfindung betrifft ein Verfahren und eine Vorrichtung zur Verbesserung der Fahrstabilität im Schubbetrieb gemäß den Oberbegriffen der Ansprüche 1 bzw. 11.

Aus der DE 35 28 389 A1 ist eine Vorrichtung der eingangs genannten Art bekannt, die einen ersten und zweiten Drehzahlsensor umfaßt, wobei der erste Drehzahlsensor ein der Drehzahl des Antriebsrades oder der Ausgangsdrehzahl des Schaltgetriebes entsprechendes erstes Drehzahlsignal und der zweite Drehzahlsensor ein der Drehzahl des geschleppten Rades des Kraftfahrzeuges entsprechendes zweites Drehzahlsignal erzeugt. Die beiden Raddrehzahlsignale werden miteinander verglichen, und für den Fall, daß das erste Drehzahlsignal eine um wenigstens einen vorbestimmten Differenzwert höhere Drehzahl repräsentiert als das zweite Drehzahlsignal, wird eine zwischen der Brennkraftmaschine und dem Schaltgetriebe angeordnete Reibungskupplung ausgerückt. Unterscheidet sich das erste und das zweite Drehzahlsignal um weniger als den vorbestimmten Differenzwert, wird die Reibungskupplung wieder eingerückt.

Mit der vorgenannten Vorrichtung ist es insbesondere möglich, bei Beschleunigungen eine bessere Fahrstabilität für den Fall zu erreichen, daß die vom Antriebsmotor auf die Antriebsräder übertragene Kraft größer ist als die zwischen den Antriebsrädern und dem Boden bestehende Haftreibung. Ab einem bestimmten Schlupf findet eine kräftemäßige Entkoppelung im Antriebsstrang statt, welche zu einem sicheren Fahrverhalten beiträgt.

Problematisch ist jedoch auch eine zu große Bremswirkung des Motors im Schubbetrieb, also wenn beim Loslassen des Gaspedals infolge der Motorbremswirkung die angetriebenen Räder zu sehr gebremst werden. Werden die Antriebsräder in einem Maß gebremst, daß die Haftreibung zwischen den Rädern und der Fahrbahn verloren geht, so kann dies insbesondere bei Kurvenfahrten zum Verlust der Seitenführung führen. Das Auftreten einer solchen Situation kann bei Fahrzeugen ohne Kupplungspedal gefährlich werden, da dann der Fahrer in einer Krisensituation keine Möglichkeit mehr für einen manuellen Eingriff besitzt. Bei einem solchen Fahrzeug würde es daher bei der vorbeschriebenen Problemsituation unweigerlich zu einem Unter- bzw. Übersteuervorgang - oder im Extremfall - zu einem Schleudervorgang kommen.

Aufgabe der Erfindung ist es, ein Verfahren und eine Vorrichtung der eingangs genannten Art dahingehend weiterzuentwickeln, daß die Fahrstabilität eines Fahrzeugs auch im Schubbetrieb verbessert bzw. sichergestellt werden kann.

Diese Aufgabe wird verfahrensmäßig durch die im Anspruch 1 und vorrichtungsmäßig durch die im Anspruch 11 genannten Merkmale gelöst.

Gemäß dem im Anspruch 1 angegebenen Verfahren wird für den Fall, daß die zweite Raddrehzahl ein bestimmtes Maß geringer ist als die erste Raddrehzahl eine Reibungskupplung im Antriebsstrang ausgerückt, so daß der Kraftschluß zwischen Antriebsmotor und angetriebenen Rädern unterbrochen werden kann. Aufgrund dieser Kraftentkopplung können sich die Raddrehzahlen der beiden Achsen wieder angleichen, woraufhin die Kupplung wieder geschlossen werden kann. Damit ist es möglich bei kritischen Situationen im Schubbetrieb die Fahrstabilität zu erhöhen und einen Unter- bzw. Übersteuervorgang sicher auszuschließen. Dies ist insbesondere dann von großer Wichtigkeit, wenn der Fahrer - beispielsweise bei Fehlen eines Kupplungspedals - keine Eingriffsmöglichkeiten mehr besitzt.

Gemäß einer vorteilhaften Ausführungsform wird die Reibungskupplung dann wieder eingerückt, wenn die angetriebenen und nicht angetriebenen Räder im wesentlichen gleiche Drehzahlen erreichen, d. h. wenn der Differenzwert zwischen ihnen im wesentlichen Null ist. Für diesen Fall besteht kein Schlupf mehr zwischen den Antriebsrädern und der Fahrbahn, so daß eine optimale Fahrstabilität gewährleistet wird.

Der Differenzwert zwischen den ersten und den zweiten Raddrehzahlwerten, ab dem eine Auskupplung erfolgen soll, ist vorzugsweise abhängig von verschiedenen Bedingungen. Zum einen kann der Grenzwert von der Motordrehzahl gewählt werden. Zum anderen kann auch beispielsweise eine Wichtung mit verschiedenen Fahrzeugbetriebsbedingungen, wie der Querbeschleunigung und/oder der eingelegten Gangstufe berücksichtigt werden. Dies hat den Vorteil, daß der Schlupf der Antriebsräder im Schubbetrieb mit Rücksicht auf die eingelegte Gangstufe oder die Querbeschleunigung gewertet wird, wobei diese Fahrzeugbetriebsbedingungen - oder aber auch andere Fahrzeugbetriebsbedingungen - einen entscheidenden Einfluß auf die Fahrzeugstabilität haben können.

Gemäß einer vorteilhaften Ausführungsform der Erfindung kann der Ausrückvorgang der Reibungskupplung schnell erfolgen. Dagegen ist beim Wiedereinrücken der Reibungskupplung Vorsicht geboten. Sollte sich beispielsweise das Fahrzeug auf Glatteis bewegen, so würde durch ein schnelles Einrücken der Reibungskupplung eine sofortige, nochmalige Blockade des entsprechenden Antriebsrades hervorgerufen werden. Aus diesem Grunde ist es von Vorteil, wenn das Einrücken der Reibungskupplung geregelt erfolgt. Beispielsweise könnte während des gesamten Einrückvorganges fortwährend die erste und zweite Raddrehzahl miteinander verglichen werden und eine Reaktion bezüglich des weiteren Einrückens erfolgen, wenn abzusehen ist, wie sich das oder die Antriebsräder bei dem Einrückvorgang verhält. Würde beim Einrückvorgang beispielsweise die Raddrehzahlgeschwindigkeit des entsprechenden Antriebsrades sofort wieder kleiner werden, so dürfte die Reibungskupplung nicht weiter eingerückt bzw. müßte wieder ausgerückt werden.

Vorzugsweise werden alle vier Räder eines Fahrzeugs erfaßt, wobei bei einer besonders vorteilhaften Ausführungsform der Erfindung der Vergleich von erster und zweiter Raddrehzahl für jede Fahrzeugseite separat geschieht. Dies gewährleistet eine größere Sicherheit bei der Beurteilung der Fahrzeugstabilität im Schubbetrieb, insbesondere dann, wenn die größere der beiden Differenzen zur Bewertung des Fahrzeugzustandes herangezogen wird.

Gemäß Anspruch 11 ist eine Vorrichtung angegeben, deren Steuervorrichtung so ausgebildet ist, daß die in den Ansprüchen 1 bis 10 genannten Verfahren durchgeführt werden können. Notwendig für eine solche Vorrichtung sind Drehzahlsensoren zur Erfassung der Raddrehzahl der entsprechenden Räder sowie eine Vergleichsvorrichtung für die entsprechenden Raddrehzahlsignale und eine Steuervorrichtung, die entsprechend dieser Vergleichsergebnisse in der Weise reagiert, wie oben angegeben wurde.

Die Erfindung wird nachfolgend, auch im Hinblick auf weitere Vorteile und Merkmale der Erfindung, mit Bezug auf die einzig beiliegende Zeichnung erläutert, welche ein Ablaufdiagramm zur Durchführung einer speziellen Ausführungsform des erfindungsgemäßen Verfahrens darstellt.

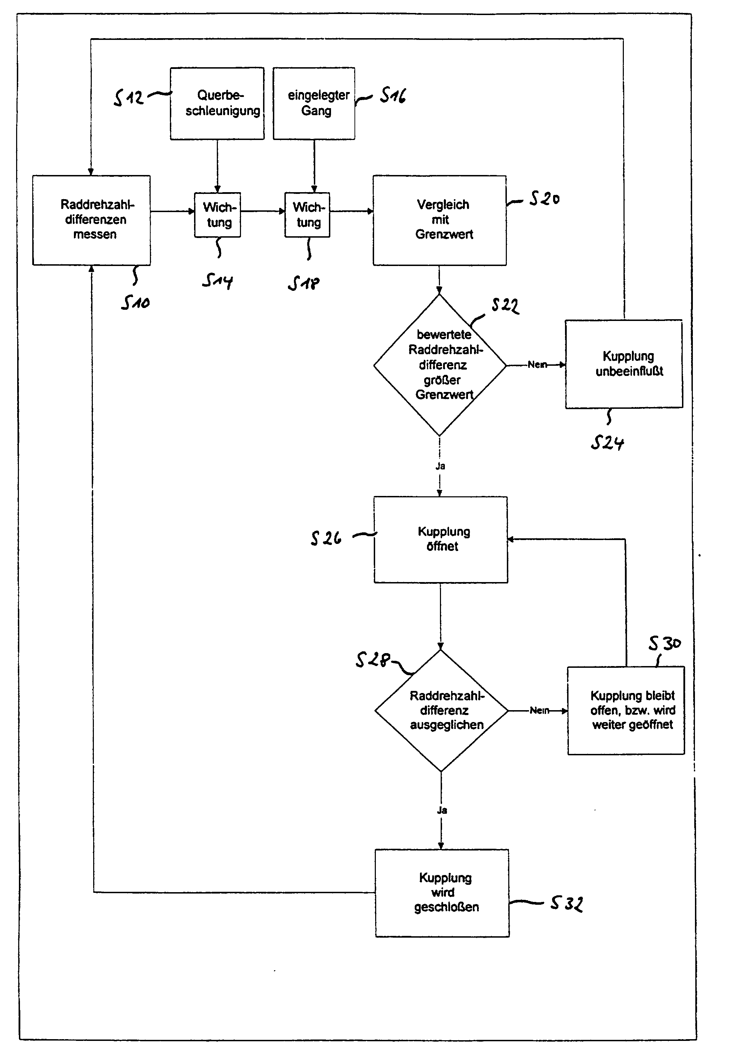

Bei dem als Ausführungsbeispiel beschriebenen Verfahren werden die Drehzahlen aller vier Räder ständig überwacht und die Raddrehzahldifferenz von Vorder- und Hinterachse gebildet (S 10). Dies geschieht, indem für jede Fahrzeugseite die Differenz von Vorderachsrad zu Hinterachsrad gebildet wird. Die größere der beiden Differenzen wird zur Überwachung des Fahrzustandes herangezogen. Diese Differenz wird gewichtet gemäß der Figur entsprechend der ermittelten Querbeschleunigung (S 12, S14) und der eingelegten Gangstufe (S16, S 18). Mit dieser Wichtung erhält man einen neuen -in der gewichteten Weise veränderten - Wert, der entsprechend der Fahrzeugzustand- bzw. Betriebsbedingungen (hier Querbeschleunigung und eingelegter Gang) in geeigneter Weise angepaßt ist, und der in dem folgenden Schritt mit einem vorgegebenen Grenzwert verglichen wird (S 20). Dieser Grenzwert kann beispielsweise von der Motordrehzahl abhängig gemacht werden. Ist die gewichtete bzw. bewertete Raddrehzahldifferenz größer als der vorgenannte Grenzwert (S 22), so wird die Kupplung umgehend geöffnet (S 26).

Ist die Raddrehzahldifferenz nicht größer (S22), so bleibt die Kupplung unbeeinflußt (S 24), und es wird zum ersten Schritt zurückverzweigt.

Wird die Reibungskupplung geöffnet (S 26), so werden weiterhin fortwährend die Raddrehzahlen der angetriebenen und der nicht angetriebenen Räder miteinander verglichen, und die Kupplung wird dann wieder eingerückt, wenn sich die Raddrehzahlen wieder angleichen (S 28). In diesem Fall geht die Raddrehzahldifferenz gegen Null.

Solange sich die Raddrehzahldifferenzen nicht angeglichen haben, bleibt die Reibungskupplung weiterhin geöffnet (S 30).

Beim Schließen der Reibungskupplung (S 32) erfolgt beim vorliegenden Ausführungsbeispiel eine Regelung in der Weise, daß während des Einrückvorgangs die Raddrehzahlen der angetriebenen Räder fortwährend überwacht werden. Fallen diese Raddrehzahlen wieder unterhalb den Wert der nicht angetriebenen Räder, so wird der Einrückvorgang nicht weiter durchgeführt bzw. entsprechend den ermittelten Werten die Reibungskupplung wieder ausgerückt.

Ist die Kupplung wieder vollständig eingerückt, so wird wieder zum ersten Schritt zurückverzweigt.

Mit dem vorgenannten Verfahren bzw. einer entsprechend ausgebildeten Vorrichtung zur Durchführung des Verfahrens kann insbesondere bei Fahrzeugen mit automatischer Kupplung die Fahrsicherheit erhöht werden. Ein Ausbrechen des Fahrzeuges aufgrund von falscher Gangwahl oder nicht angemessenem Lastwechsel wird verhindert. Die Funktion kann in bereits vorhandene Bauteile bzw. -funktionen (Kupplungsmanagement, ABS, ASC etc.) integriert werden, wodurch eine Erhöhung der Gesamtkosten im wesentlichen vermieden werden kann.

## Patentansprüche

1. Verfahren zur Verbesserung der Fahrstabilität im Schubbetrieb, mit den Schritten:
- Erfassen einer ersten Raddrehzahl der nicht angetriebenen Räder,
- Erfassen einer zweiten Raddrehzahl der angetriebenen Räder,
- **gekennzeichnet durch** die Schritte,
daß eine zwischen dem Antriebsmotor und den Rädern im Antriebsstrang angeordnete Reibungskupplung ausgerückt wird, wenn die zweite Raddrehzahl geringer ist als die erste Raddrehzahl und die Differenz zwischen erster und zweiter Raddrehzahl einen vorgegebenen Grenzwert überschreitet, und
daß die Reibungskupplung wieder eingerückt wird, wenn die Differenz zwischen erster und zweiter Raddrehzahl einen zweiten Grenzwert erreicht oder unterschreitet, wobei der zweite Grenzwert niedriger als der erste Grenzwert ist.

2. Verfahren nach Anspruch 1,
**dadurch gekennzeichnet, daß** der zweite Grenzwert im wesentlichen Null ist.

3. Verfahren nach Anspruch 1 oder 2,
**dadurch gekennzeichnet, daß** der erste Grenzwert in Abhängigkeit von der Motordrehzahl gewählt wird.

4. Verfahren nach einem der Ansprüche 1 bis 3,
**dadurch gekennzeichnet, daß** der erste Grenzwert in Abhängigkeit von Fahrzeugbetriebsbedingungen gewichtet wird.

5. Verfahren nach Anspruch 4,
**dadurch gekennzeichnet, daß** als Fahrzeugbetriebsbedingungen zumindest die Querbeschleunigung und/oder die eingelegte Gangstufe berücksichtigt werden.

6. Verfahren nach einem der Ansprüche 1 bis 5,
**dadurch gekennzeichnet, daß** das Ausrücken der Reibungskupplung schnell erfolgt.

7. Verfahren nach einem der Ansprüche 1 bis 6,
**dadurch gekennzeichnet, daß** das Einrücken der Reibungskupplung geregelt erfolgt.

8. Verfahren nach Anspruch 7,
**dadurch gekennzeichnet, daß** während des Einrückvorganges fortwährend die erste und zweite Raddrehzahl miteinander verglichen werden und für den Fall, daß sich die Differenz zwischen erster und zweiter Raddrehzahl beim Einrückvorgang wieder erhöht, die Reibungskupplung nicht weiter eingerückt oder wieder ausgerückt wird.

9. Verfahren nach einem der Ansprüche 1 bis 8,
**dadurch gekennzeichnet,**
**daß** die Raddrehzahlen aller vier Räder eines Fahrzeugs erfaßt werden.

10. Verfahren nach einem der Ansprüche 1 bis 9,
**dadurch gekennzeichnet,**
**daß** der Vergleich von erster und zweiter Raddrehzahl für jede Fahrzeugseite separat geschieht und die größere Differenz verwendet wird.

11. Vorrichtung zur Verbesserung der Fahrstabilität eines Fahrzeugs im Schubbetrieb, umfassend
- eine zwischen einem Antriebsmotor und angetriebenen Rädern zwischengeschaltete Reibungskupplung,
- einer Stellvorrichtung zum Aus- und Einrücken der Reibungs-kupplung,
- zumindest einen ersten Drehzahlsensor, der ein der Drehzahl der nicht angetriebenen Rädern entsprechendes Signal erzeugt,
- zumindest einen zweiten Drehzahlsensor, der ein der Drehzahl der angetriebenen Räder entsprechendes Signal erzeugt,
**dadurch gekennzeichnet, daß**
eine Steuervorrichtung vorgesehen ist, welche die zumindest beiden Signale empfängt und zur Durchführung des Verfahrens gemäß den Ansprüchen 1 bis 10 ausgebildet ist.

## Claims

1. A method for improving driving stability during deceleration, comprising the steps of:
- capturing a first rotational speed of the non-driven wheels,
- capturing a second rotational speed of the driven wheels,
**characterised by** the steps of:
disengaging a friction clutch arranged in the drivetrain between the drive motor and the wheels, if the second wheel rotational speed is lower than the first wheel rotational speed and the difference between the first and second wheel rotational speeds exceeds a predefined limit value, and
re-engaging the friction clutch when the difference between the first and second wheel rotational speeds reaches or falls below a second limit value, the second limit value being lower than the first limit value.

2. A method according to Claim 1, **characterised in that** the second limit value is substantially zero.

3. A method according to Claim 1 or 2, **characterised in that** the first limit value is selected as a function of engine speed.

4. A method according to any one of claims 1 to 3, **characterised in that** the first limit value is weighted as a function of vehicle operating conditions.

5. A method according to Claim 4, **characterised in that** at least lateral acceleration and/or the selected gear is/are taken into account as vehicle operating conditions.

6. A method according to any one of claims 1 to 5, **characterised in that** disengagement of the friction clutch is effected rapidly.

7. A method according to any one of claims 1 to 6, **characterised in that** engagement of the friction clutch is effected in a controlled manner.

8. A method according to Claim 7, **characterised in that** during the engagement process the first and second wheel rotational speeds are continuously compared to each other and if the difference between the first and second wheel rotational speeds increases during the engagement process the friction clutch is not engaged further or is again disengaged.

9. A method according to any one of claims 1 to 8, **characterised in that** the rotational speeds of all four wheels of a vehicle are captured.

10. A method according to any one of claims 1 to 9, **characterised in that** the comparison between the first and second wheel rotational speeds is carried out separately for each side of the vehicle and the greater difference is used.

11. A system for improving the driving stability of a vehicle during deceleration, comprising
- a friction clutch inserted between a drive motor and driven wheels,
- an actuating device for disengaging and engaging the friction clutch,
- at least one first rotational speed sensor which generates a signal corresponding to the rotational speed of the non-driven wheels,
- at least one second rotational speed sensor which generates a signal corresponding to the rotational speed of the driven wheels,
**characterised in that**
a control unit is provided which receives at least the two signals and is configured to implement the method according to claims 1 to 10.

## Revendications

1. Procédé pour améliorer la tenue de route en mode de poussée (décélération) comprenant les étapes suivantes :
- saisie d'une première vitesse de rotation de roues non motrices,
- saisie d'une seconde vitesse de rotation des roues motrices,
**caractérisé par** les étapes suivantes
on débraye un embrayage à friction entre le moteur et les roues dans la ligne de transmission si la seconde vitesse de rotation des roues est inférieure à la première vitesse de rotation des roues et si la différence entre la première la seconde vitesse de rotation de roue dépasse une valeur limite prédéterminée, et
on embraye de nouveau l'embrayage à friction si la différence entre la première et la seconde vitesse de rotation de roue atteint ou passe en dessous d'une seconde valeur limite, cette seconde valeur limite étant inférieure à la première valeur limite.

2. Procédé selon la revendication 1,
**caractérisé en ce que**
la seconde valeur limite est essentiellement égale à zéro.

3. Procédé selon l'une quelconque des revendications 1 ou 2,
**caractérisé en ce que**
la première valeur limite est choisie en fonction de la vitesse de rotation du moteur.

4. Procédé selon l'une quelconque des revendications 1 à 3,
**caractérisé en ce que**
la première valeur limite est pondérée selon les conditions de fonctionnement du véhicule.

5. Procédé selon la revendication 4,
**caractérisé en ce que**
comme condition de fonctionnement du véhicule on tient compte au moins de l'accélération transversale et/ou du rapport de vitesses utilisé.

6. Procédé selon l'une quelconque des revendications 1 à 5,
**caractérisé en ce que**
le débrayage de l'embrayage à friction se fait rapidement.

7. Procédé selon l'une quelconque des revendications 1 à 6,
**caractérisé en ce que**
l'embrayage de l'embrayage à friction se fait de manière régulée.

8. Procédé selon la revendication 7,
**caractérisé en ce que**
pendant l'opération d'embrayage on continue de comparer la première et la seconde vitesse de rotation de roue et au cas où la différence entre cette première et cette seconde vitesse de rotation de roue augmente de nouveau lors de l'opération d'embrayage, on ne continue pas d'embrayer l'embrayage à friction ou on débraye de nouveau.

9. Procédé selon l'une quelconque des revendications 1 à 8,
**caractérisé en ce qu'**
on saisit la vitesse de rotation des quatre roues du véhicule.

10. Procédé selon l'une quelconque des revendications 1 à 9,
**caractérisé en ce qu'**
on effectue séparément la comparaison de la première et de la seconde vitesse de rotation de roue pour chaque côté du véhicule et on utilise la différence la plus grande.

11. Dispositif pour améliorer la tenue de route d'un véhicule en mode de poussée comprenant :
- un embrayage à friction entre le moteur et les roues motrices,
- un dispositif d'actionnement pour embrayer et débrayer l'embrayage à friction,
- au moins un premier capteur de vitesse de rotation qui génère un signal correspondant à la vitesse de rotation des roues non motrices,
- au moins un second capteur de vitesse de rotation qui génère un signal correspondant à la vitesse de rotation des roues motrices,
**caractérisé par**
un dispositif de commande qui reçoit au moins les deux signaux et exécute le procédé selon l'une des revendications 1 à 10.
